# EUROPÄISCHE PATENTSCHRIFT

(11) **EP 1 154 955 B1**
(45) Veröffentlichungstag und Bekanntmachung des Hinweises auf die Patenterteilung: **11.09.2002**
(21) Anmeldenummer: 00905024.6
(22) Anmeldetag: 04.02.2000
(51) Int. Cl.: C01C 3/16

(54) **VERFAHREN ZUR HERSTELLUNG VON NATRIUM-DICYANAMID**
METHOD OF PRODUCING SODIUM DICYANAMIDE
PROCEDE DE FABRICATION DE DICYANAMIDE DE SODIUM

(30) Priorität: 06.02.1999 DE 19904877
(43) Veröffentlichungstag der Anmeldung: 21.11.2001
(73) Patentinhaber: SKW Trostberg Aktiengesellschaft, 83308 Trostberg (DE)
(72) Erfinder: THALHAMMER, Franz, D-83308 Trostberg (DE); TAUTZ, Helmut, D-93326 Abensberg (DE)
(74) Vertreter: Böhm, Brigitte, Dipl.-Chem. Dr.
(86) Internationale Anmeldenummer: EP0000900
(87) Internationale Veröffentlichungsnummer: WO00046151

(56) Entgegenhaltungen:
- GB-A- 1 218 470
- US-A- 3 052 517
- PATENT ABSTRACTS OF JAPAN vol. 012, no. 181 (C-499), 27. Mai 1988 (1988-05-27) & JP 62 288102 A (KYOWA GAS CHEM IND CO LTD), 15. Dezember 1987 (1987-12-15)
- DATABASE WPI Section Ch, Week 197444 Derwent Publications Ltd., London, GB; Class E34, AN 1974-75889V XP002137498 & CA 956 081 A (AMERICAN CYANAMID CO), 15. Oktober 1974 (1974-10-15)
- DATABASE WPI Section Ch, Week 198848 Derwent Publications Ltd., London, GB; Class E35, AN 1988-342894 XP002137499 & JP 63 256513 A (MITSUBISHI GAS CHEM CO INC), 24. Oktober 1988 (1988-10-24) in der Anmeldung erwähnt

## Beschreibung

Die vorliegende Erfindung betrifft ein vorzugsweise kontinuierliches Verfahren zur Herstellung von Natrium-Dicyanamid, welches insbesondere für den großtechnischen Maßstab geeignet ist.

Natrium-Dicyanamid wird in großen Mengen zur Herstellung biozider Wirkstoffe im Sanitär- und Healthcare-Bereich sowie zur Desinfektion in der Nahrungsmittelproduktion eingesetzt.

Entsprechend dem Stand der Technik werden zur Herstellung von Natrium-Dicyanamid verschiedene Verfahren angewendet. So wird bspw. im CA-Referat Vol. 109, 218 568 (1988) die Reaktion von Ammoniak mit Chlorcyan und Metallhydroxiden bei 20 bis 30 °C beschrieben. Dabei wird ein Umsatz von 90,5 % mit einer Reinheit von 94,3 % erreicht. Diese Verfahrensweise ist jedoch mit einigen grundlegenden Nachteilen verbunden. Durch das niedrige Temperaturniveau ist bei der stark exothermen Reaktion der Einsatz von Kühlsole und damit teurer elektrischer Kühlenergie erforderlich. Da der Raum/Zeit-Umsatz in erster Linie von der Effektivität der Wärmeabfuhr bestimmt ist und bei diesem Verfahren darüber hinaus eine vergleichsweise große Menge an Reaktionswärme frei wird, ist mit sehr hohen Herstellkosten wegen der vergleichsweise großen Apparaturen und der schlechten Wärmebilanz zu rechnen. Darüber hinaus wird pro Mol Natrium-Dicyanamid etwa die doppelte Menge an Chlorcyan und Natronlauge verbraucht, um intermediär Cyanamid herzustellen. Dabei fällt zusätzlich eine äquimolare Menge verunreinigtes Natriumchlorid an, das sehr kostenaufwendig zu entsorgen ist, was unter Umweltgesichtspunkten problematisch erscheint.

Ein generelles Problem bei der Herstellung von Natrium-Dicyanamid ist die Abtrennung des Nebenproduktes Natriumchlorid, da es sich bei beiden Verbindungen um Natriumsalze mit guter Löslichkeit in Wasser handelt. Ein Prozeß, bei dem die doppelte Menge Natriumchlorid im Gemisch mit dem Zielprodukt anfällt, führt damit auch zu erheblich verschlechterter Ausbeute an reinem Natrium-Dicyanamid.

Die von Wirkstoffherstellern geforderte Reinheit von Natrium-Dicyanamid beträgt üblicherweise mindestens 97 Gew.-%, vielfach sogar min. 98 Gew.-%, die nach dem Verfahren gemäß CA 109;210 568 (1988) nicht erreicht wird.

Ein ähnliches Verfahren wird im CA-Referat Vol. 110;138 089 (1989) beschrieben, wobei eine Lösung von Chlorcyan in Benzol vorgelegt und Ammoniak zudosiert wird. Die Menge an vorgelegtem Chlorcyan sowie die Verwendung organischer Lösemittel - in diesem Fall des krebserregenden Benzols - machen dieses Verfahren großtechnisch unpraktikabel.

Das kanadische Patent 956 081 beschreibt einen alternativen Syntheseweg, von Natrium-Dicyanamid ausgehend von Cyanamid, Natriumcyanid und Chlor unter Zudosieren von Natronlauge.

Aus der Reaktionsgleichung wird deutlich, daß auch bei diesem Verfahren pro Mol Natrium-Dicyanamid zwei Mol Natriumchlorid gebildet werden, mit der Folge, daß die bereits oben geschilderten Probleme der Abtrennung mit negativen Auswirkungen auf Produktreinheit und Ausbeute auftreten. Das Verfahren liefert zwar Umsätze von > 96 %, aber isolierte Ausbeuten von 73 bis 78 % bei einer Reinheit von 73 bis 86 Gew.-%. Dies spiegelt die Schwierigkeit der diskutierten Natriumchiorid-Abtrennung wieder. Auch unter dem Gesichtspunkt der Rohstoffund Entsorgungskosten ist dieses Verfahren nachteilig, da die eingesetzten Rohstoffe Natriumcyanid und Chlor erheblich teurer sind als Chlorcyan und Natronlauge.

Ein weiteres Verfahren zur Herstellung von Natrium-Dicyanamid ist in US-A-3,052,517 beschrieben. Dabei wird Natrium-Dicyanamid durch die Umsetzung von Cyanamid mit Natriumhydroxid bei einem pH-Wert zwischen 10 und 12 und einer Reaktionstemperatur zwischen 0 und 30 °C hergestellt. Das Verfahren liefert Ausbeuten von 70 % bei einer Reinheit von 80 %. Die von Wirkstoffherstellern geforderte Reinheit von Natrium-Dicyanamid im Bereich von mindestens 97 Gew,-% kann demzufolge auch mit diesem Verfahren nicht erreicht werden.

Der vorliegenden Erfindung lag daher die Aufgabe zugrunde, ein Verfahren zur Herstellung von Natrium-Dicyanamid zu entwickeln, welches die genannten Nachteile entsprechend dem Stand der Technik nicht aufweist, sondern welches es erlaubt, Natrium-Dicyanamid aus großtechnisch verfügbaren, preisgünstigen Rohstoffen herzustellen und
dabei den hohen Ansprüchen an die Sicherheit und die Produktreinheit gerecht wird.

Diese Aufgabe wurde erfindungsgemäß dadurch gelöst, daß man Cyanamid in wäßriger Lösung gleichzeitig mit Natronlauge und Chlorcyan bei Temperaturen von 40 bis 100 °C und einem pH-Wert von 7,0 bis 10,0 umsetzt.

Es hat sich hierbei überraschenderweise gezeigt, daß ein äußerst reines Natrium-Dicyanamid in sehr guten Ausbeuten auch bei Verwendung technischer Rohstoffe erhalten werden kann. Dies war deshalb so überraschend, weil das Verfahren auch bei erhöhten Temperaturbedingungen ohne nachteilige Auswirkungen auf die Reinheit des Produkts und die Selektivität der Reaktion durchgeführt werden kann und dem Durchschnittsfachmann bekannt ist, daß unter den beanspruchten Reaktionsbedingungen normalerweise Cyanamid sehr rasch dimerisiert und Chlorcyan mit Natronlauge sehr rasch zu Cyanat hydrolisiert. Vor diesem Hintergrund bestand in der Fachwelt das Vorurteil, für Reaktionen mit Chlorcyan in wäßrig-alkalischen Medien die Reaktionstemperatur möglichst gering zu halten.

Beim Verfahren entsprechend der vorliegenden Erfindung wird Cyanamid in wäßriger Lösung gleichzeitig mit Natronlauge und Chlorcyan zur Umsetzung gebracht. Mit der Wahl von Cyanamid als Rohstoff wird erreicht, daß bei der Reaktion nur 1 Äquivalent Natriumchlorid als Nebenprodukt anfällt. Vorzugsweise wird Cyanamid in Form einer 20 bis 60 Gew.-%igen wäßrigen Lösung, insbesondere in der handelsüblichen Konzentration von 50 Gew.-% (SKW Cyanamid L500), und die Natronlauge als 10 bis 50 Gew.-%ige wäßrige Lösung, insbesondere 20 bis 30 Gew.-%ige Lösung, eingesetzt. Wird die Konzentration von Cyanamid verringert, ist es vorteilhaft, den Gehalt der Natronlauge zu erhöhen und umgekehrt.

Mit der Konzentration der Rohstoffe Cyanamid und Natronlauge läßt sich die Produktkonzentration beliebig steuern. So werden vorzugsweise solche Rohstoff-Konzentrationen eingesetzt, daß daraus ohne Eindampf- oder
Verdünnungsoperationen eine Produktkonzentration resultiert, bei der das Reaktionsprodukt Natrium-Dicyanamid bei der jeweiligen Reaktionstemperatur vollständig in Lösung bleibt und aus der bei der Kristallisation Natrium-Dicyanamid möglichst weitgehend, das stöchiometrische Nebenprodukt Natriumchlorid aber noch nicht auskristallisiert. Grundsätzlich ist es aber möglich, die Konzentrationen dieser Reaktionskomponenten unabhängig und beliebig zu wählen, wenn man den oben erwähnten Vorteil einer direkten Kristallisation des Produkts nicht beabsichtigt oder die Reaktionsmischung nachträglich durch Aufkonzentrieren oder Verdünnen auf die gewünschte Konzentration einstellt.

Chlorcyan läßt sich nach dem erfindungsgemäßen Verfahren vorzugsweise als technisches Gas einsetzen, was sowohl für die Wirtschaftlichkeit als auch für die Anlagensicherheit von ausschlaggebender Bedeutung ist. Zum einen kann im Gegensatz zum Einsatz in kondensierter oder gelöster Form der hold up in einer Anlage auch bei einer großtechnischen Produktion äußerst gering gehalten werden und damit eine Gefährdung von Personal und Umwelt nahezu ausgeschlossen werden. Bei gasförmigem Chlorcyan besteht im Gegensatz zu kondensierten oder hochkonzentrierten Lösungen auch nicht die Gefahr einer spontanen, stark exothermen Trimerisierung.

Technisches Chlorcyan enthält auch Nebenbestandteile im Bereich von 3 bis 8 Vol.-%, wie z. B. Kohlendioxid oder Chlor. Auch hier hat sich überraschenderweise gezeigt, daß diese Nebenbestandteile zu völlig unschädlichen Produkten führen, die nicht im isolierten Natrium-Dicyanamid enthalten sind.

Es ist als ein wesentlicher Vorteil des erfindungsgemäßen Verfahrens anzusehen, daß die Reaktion im Gegensatz zum Stand der Technik auch bei erhöhter Temperatur, insbesondere bei 40 bis 80 °C, bevorzugt bei 50 bis 80 °C, durchgerührt werden kann, ohne daß hierbei vermehrt Nebenreaktionen auftreten. Dies hat entscheidende Konsequenzen in ökologischer und verfahrenstechnischer Hin-sicht. Die enorme Exothermie der Reaktion wird zum einen zum Erwärmen der kalt zudosierten Reaktionsparameter genutzt, zum anderen kann die überschüssige Wärme einfach über einen Wärmetauscher mit kaltem Wasser abgeführt werden. Bei den Verfahren entsprechend dem Stand der Technik reicht der Temperaturgradient von Reaktionslösung zu Kühlwasser für eine wirtschaftliche Fahrweise nicht aus, so daß mit elektrischer Kühlenergie gearbeitet werden muß.

Bei der Durchführung der erfmdungsgemäßen Reaktion hat es sich *als* besonders vorteilhaft erwiesen, die Mengen der Reaktionsteilnehmer gezielt zu steuern. Hierbei hat es sich nämlich gezeigt, daß die Reaktion und auch die folgenden Verfahrensschritte optimal verlaufen, wenn ein bestimmtes stöchiometrisches Verhältnis während jeder Phase der Dosierung eingehalten wird. Die Dosierung von Natrpnlauge und Cyanamid wird vorzugsweise durch eine Mengenmessung abhängig von der Konzentration dieser Rohstoffe bewerkstelligt. Hierbei wird das Verhältnis der Reaktanden vorzugsweise so eingestellt, daß pro Mol Cyanamid 2,0 bis 2,4 Mol, vorzugsweise 2,1 bis 2,2 Mol, an Natriumhydroxid eingesetzt werden. Das exakte Verhältnis ist von der Reinheit des verwendeten Chlorcyans abhängig.

Eine exakte und zuverlässige mengengeregelte Dosierung von gasförmigem, technischem Chlorcyan ist meßtechnisch äußerst schwierig. Herkömmliche Geräte zur Durchflußmessung sind in der Praxis wenig brauchbar. Aus diesem Grund wird vorzugsweise Chlorcyan pH-geregelt so zudosiert, daß in der Reaktionslösung ein pH-Wert von 7,0 bis 10,0, vorzugsweise 7,0 bis 8,5, eingehalten wird. Der pH-Wert wird vorzugsweise bei Zudosierung des Chlorcyans konstant gehalten. Bei diesem pH-Wert reagieren die Reaktionspartner sofort in der gewünschten Weise. Bei niedrigerem pH-Wert besteht die Gefahr, daß das extrem toxische Chlorcyan nicht vollständig abreagiert und bei der Aufarbeitung freigesetzt wird. Bei höheren pH-Werten treten verstärkt Nebenreaktionen wie Hydrolyse von Chlorcyan und Dimerisierung von Cyanamid auf. In der Regel wird Chlorcyan in äquimolarem oder annähernd äquimolarem Verhältnis bezogen auf das eingesetzte Cyanamid verwendet. Gemäß einer bevorzugten Ausführungsform werden die Rohstoffe gleichzeitig einem Reaktor mit guter Durchmischung separat zudosiert und die Reaktionslösung kontinuierlich abgezogen. Eine vorangehende Mischung von Cyanamid und Natronlauge oder Cyanamid und Chlorcyan ist zwar

prinzipiell möglich, hat aber Nachteile bzgl. Produktqualität oder Verfahrenssicherheit.

Durch die gleichzeitige Dosierung der Rohstoffe in einen Reaktor (bspw. Verweilzeitreaktor) mit guter Durchmischung sind während des gesamten Reaktionsverlaufs immer die gleichen Konzentrations-, Temperatur- und pH-Bedingungen gegeben. Dies führt zu zwei wichtigen positiven Effekten, nämlich zum einen der Minimierung unerwünschter Nebenprodukte, z. B. Dicyandiamid und Natrium-N-cyanisoharnstoff, die eine saubere selektive Kristallisation des Produktes behindern und selbst schwer abzutrennen sind. Zum zweiten können dadurch die Dimensionen des Reaktors, des Wärmetauschers und anderer Apparate reduziert werden, was zu erheblichen Einsparungen bei Investitionen und Instandhaltung führt. Geeignete Reaktoren sind z. B. Kreislaufreaktoren mit statischen Mischern bzw. Mischdüsen oder Rührreaktoren mit Begasungsrührer.

Im Anschluß an die Reaktion läßt sich Natrium-Dicyanamid aus der warmen Reaktionslösung direkt durch gezielte Kristallisation entweder batchweise über eine gesteuerte Abkühlkurve oder einen kontinuierlich betriebenen Kristallisator in sehr reiner Form auskristallisieren. Geht man von technischen Rohstoffen aus, so kann die Reaktionslösung noch geringe Mengen färbender Verunreinigungen enthalten, die in der Regel nicht hochmolekularer Natur sind.

Gemäß einer bevorzugten Ausführungsform kann diese Färbung durch Behandlung mit Aktivkohle auch in sehr geringen Mengen effektiv beseitigt werden. Hierzu wird die Produktlösung in der Wärme mit 0,1 bis 5 g Aktivkohle pro Liter versetzt und die Kohle vor der Kristallisation wieder auf übliche Weise abgetrennt. Alternativ kann die Lösung auch über eine Aktivkohleschüttung oder mit Aktivkohle präparierte Filter gefahren werden.

Als wichtiger Vorteil der vorliegenden Erfindung muß die Tatsache angesehen werden, daß trotz hoher Konzentration das Produkt in der Reaktionsmischung gelöst erhalten wird oder durch weiteres Erwärmen auf bspw. 60 bis 100 °C vollständig in Lösung gebracht wird.

Ausgehend von dieser Lösung läßt sich durch geregeltes Abkühlen eine selektive Kristallisation von Natrium-Dicyanamid erreichen, während das stöchiometrische Nebenprodukt Natriumchlorid in Lösung bleibt. Die Kristallisation erfolgt einheitlich ohne Bildung von Co-Kristallisaten oder Einschlüssen, so daß eine aufwendige Umkristallisation des Produkts oder sonstige Aufreinigung nicht erforderlich ist. Eine selektive Kristallisation von Natrium-Dicyanamid ist auch durch kontrolliertes kontinuierliches Zugeben warmer Natrium-Dicyanamid-Lösung zu einer gekühlten Produktsuspension oder durch Aufkonzentration aus verdünnten Lösungen ggf. unter gleichzeitiger Kühlung möglich. Entscheidend hierbei ist, daß die Löslichkeitskurve von Natriumchlorid nicht unterschritten wird.

Die Isolierung von Natrium-Dicyanamid erfolgt dann in üblicher Weise duch Filtration, wobei anhaftende Restmutterlauge durch vorsichtiges Waschen mit Wasser entfernt werden kann.

Mit Hilfe des erfindungsgemäßen Verfahrens ist es möglich, ausgehend von technisch verfügbaren Rohstoffen Natrium-Dicyanamid auf sehr umweltschonende Weise in guten Ausbeuten von ca, 75 bis 95 % und sehr hohen Reinheiten von bis zu 100 % herzustellen, weshalb sich dieses Verfahren besonders gut für den großtechnischen Maßstab eignet.

Die nachfolgenden Beispiele sollen die Erfindung näher veranschaulichen.

### Beispiele

### Beispiel 1

Ein 2,51 Kreislaufreaktor mit Temperatur- und pH-Messung, Wärmetauscher und Dosiersystem mit statischem Mischer wurde kontinuierlich betrieben. Das Dosiersystem bestand aus einem Glasrohr im Reaktorkreislauf mit getrennten Stutzen für Cyanamid, Natronlauge und Chlorcyan. Unmittelbar nach diesen Dosierstutzen befand sich eine Mischstrecke (Ø 1,6 cm, Länge 5 cm) mit Sulzer-Mischelementen. Die durchschnittliche Umlaufmenge betrug 14 l/min. Zum Start wurde der Reaktor mit Wasser von 60 °C befüllt und dann die Dosierung der Rohstoffe begonnen.

| Über Schlauchpumpen werden folgende Mengen pro Stunde zudosiert: | | | |
|---|---|---|---|
| **Rohstoff** | **Konzentration** | **Menge/h** | **Mol/h** |
| **Cyanamid** | 50,1% | 515 g | 6,13 |
| **Natronlauge** | 28,0 % | 1 857 g | 13,00 |

Gleichzeitig wurde technisches Chlorcyan gasförmig so eingeleitet, daß ein pH-Wert von 7,5 bis 8,0 eingehalten wurde. Der Verbrauch wurde mit 370 g/h (6,02 Mol/h) bezogen auf Reinsubstanz bestimmt. Bei dieser Dosierung ergab sich eine durchschnittliche Verweilzeit von 1 Stunde 35 Minuten im Reaktor. Der Wärmetauscher wurde mit Kühlwasser so beaufschlagt, daß sich eine Reaktionstemperatur von 70 bis 75 °C einstellte. Die zudosierten Volumina wurden über einen freien Überlauf abgenommen und über eine Schüttung mit gepulverter Aktivkohle (10 g pro 151 Reaktionslösung) in einen Pufferbehälter geleitet. Der Pufferbehälter wurde während der Befüllung auf 75 °C gehalten und anschließend mit einer linearen Kühlkurve innerhalb von 7,5 Stunden auf 0 °C abgekühlt. Durch wechselseitige Befüllung zweier Puffergefäße konnte die Reaktion kontinuierlich geführt werden. Nach der Kristallisation wurde das Produkt auf einer Filternutsche abgesaugt und mit 500 ml Eiswasser pro kg Filterkuchen gewaschen.

Es wurde Natrium-Dicyanamid in einer Reinheit von 100 % ohne nachweisbare Verunreinigung an Dicyandiamid oder Natrium-N-cyanisoharnstoff und einem Chloridgehalt von 0,2 % erhalten. Der APHA-Wert (Verfärbung) einer 10 %igen Lösung in Wasser betrug 10. Die isolierte Ausbeute betrug 76 % bezogen auf eingesetztes Cyanamid.

### Beispiel 2

Analog Beispiel 1 wurde in kontinuierlicher Weise in der geschilderten Apparatur Natrium-Dicyanamid hergestellt mit dem Unterschied, daß die Reaktionslösung nicht über Aktivkohle filtriert wurde. Das isolierte Natrium-Dicyanamid hatte eine Reinheit von 99 % ohne erkennbare Verunreinigungen an Dicyandiamid und Natrium-N-cyanisoharnstoff und einem Chloridgehalt von 0,6 %.

Der APHA-Wert (Verfärbung) einer 10 %igen Lösung in Wasser betrug 55.

### Beispiel 3

Ein Kreislaufreaktorsystem mit einem Gesamtvolument von 4,21, bestehend aus einem doppeltwandigen Glasgefäß, einer Membran-Umwälzpumpe und einem Dosiersystem für die Rohstoffe, wurde kontinuierlich zur Herstellung von Natrium-Dicyanamid betrieben. Das Dosiersystem bestand aus einer Treibstrahldüse betrieben mit Reaktionslösung, die gasförmiges Chlorcyan ansaugte und mit den unmittelbar am Düsenaustritt über Schlauchpumpen zudosierten Reaktionspartnern Cyanamid und Natronlauge vermischte. Über den Deckel des Glasgefäßes führte ein freier Überlauf in einen auf 70 °C beheizten Pufferbehälter. Im Glasgefäß wurden Temperatur und pH-Wert kontrolliert und danach die Dosierung der Rohstoffe gesteuert. Die Kreislaufmenge wurde vom Boden des Reaktors entnommen und mit der Membranpumpe auf einen für den Treibstrahl erforderlichen Druck von 1,4 bar gebracht. Zur Vergleichmäßigung des Drucks war ein Ausgleichsbehälter zwischen Pumpe und Treibstrahldüse geschaltet. Diese Versuchsanordnung wurde mit folgenden Parametern betrieben:

| | |
|---|---|
| Kreislaufmenge | 210 l/Stunde |
| Konstantes Molverhältnis Natriumhydroxid zu Cyanamid = 2,18 | |
| Konzentration Cyanamid | 50,0 % |
| Konzentration Natronlauge | 28,0 % |
| Temperatur im Kreislaufreaktor | 70 bis 75 °C |
| Düsendruck | 1,4 bar |
| pH-Wert | 7,2-8,0 |

| Dosierraten: | |
|---|---|
| Cyanamid | 925 g/Stunde = 11,01 Mol/Stunde |
| Natronlauge | 3430 g/Stunde = 24,01 Mol/Stunde |
| Chlorcyan (96 %ig) | 705 g/Stunde = 11,01 Mol/Stunde |

Zum Start wurde der Kreislaufreaktor mit Wasser von 70 °C befüllt und die Kreislaufmenge eingestellt. Dann wurde die Dosierung der Rohstoffe gestartet, wobei die Chlorcyanmenge so geregelt wurde, daß die Innentemperatur bei äußerer Kühlung mit Kühlwasser (18 °C) im Bereich 70 bis 75 °C blieb. Die flüssigen Komponenten Cyanamid und Natronlauge wurden mit dem konstanten Molverhältnis über regelbare Schlauchpumpen pH-kontrolliert zugespeist. Über den freien Überlauf wurde die Produktlösung im Pufferbehälter gesammelt und nach dessen Füllung in einen gerührten Kristallisationsbehälter abgelassen. Innerhalb von 4 Stunden wurde über eine lineare Kühlkurve auf 0 °C abgekühlt und das Produkt durch Filtration auf einer Saugnutsche isoliert. Es wurde mit 500 ml Eiswasser pro kg Filterkuchen nachgewaschen und im Vakuum bei 60 °C getrocknet.
Auf diese Weise wurden pro Stunde 803 g (= 82 % d. Th) Natrium-Dicyanamid mit einer Reinheit von 98,5 % erhalten. Als einzige Verunreinigung > 0,1 % war Natriumchlorid mit 1,3 % enthalten.

### Beispiel 4

Analog Beispiel 3 wurde kontinuierlich eine Natrium-Dicyanamid-Lösung hergestellt, diese jedoch nach dem freien Überlauf aus dem Reaktorsystem direkt in eine im Pufferbehälter vorgelegte und auf 0 °C gekühlte Produktsuspension gefahren. Nach Befüllen des Pufferbehälters wurde dieser bis auf einen Rest von ca. 1 Liter entleert und ohne Unterbrechung von neuem befüllt. Die abgenommene Natrium-Dicyanamid-Suspension wurde in gewohnter Weise filtriert, der Filterkuchen gewaschen und getrocknet.
Es wurden pro Stunde 814 g (= 83 % d. Th) Natrium-Dicyanamid mit einer Reinheit von 98,3 % erhalten.

### Beispiel 5

Analog Beispiel 3 wurde Natrium-Dicyanamid hergestellt, allerdings der Filterkuchen bei der Produktisolierung nicht gewaschen. Es wurden 920 g/Stunde (= 94 % d. Th) an Natrium-Dicyanamid mit einer Reinheit von 94,8 % erhalten. Das Produkt enthielt 4,8 % Natriumchlorid und 0,18 % Natrium-N-cyanisoharnstoff.

### Beispiel 6

Entsprechend Beispiel 3 wurde Natrium-Dicyanamid hergestellt, mit dem Unterschied, daß im Reaktionsteil eine Temperatur von 50 bis 55 °C eingehalten wurde, während im Pufferbehälter eine Temperatur von 90 °C eingestellt war. Wegen des geringen Temperaturniveaus bei gleicher Kühlfläche konnten in diesem Versuch pro Stunde folgende Mengen dosiert werden:
823 g (9,8 Mol) Cyanamid (50 %ig)
3050 g (20,4 Mol) Natronlauge (28 %ig)
608 g (9,5 Mol) Chlorcyan (96 %ig)

Während der Reaktion bildeten sich bereits Kristalle, die sich allerdings im beheizten Puffergefäß wieder auflösten. Es wurden nach der entsprechenden Aufarbeitung 690 g/Stunde (79 % d. Th) Natrium-Dicyanamid in einer Reinheit von 97,6 % erhalten.

### Beispiel 7

Entsprechend Beispiel 6 wurde Natrium-Dicyanamid kontinuierlich hergestellt, mit dem Unterschied, daß eine 15 Gew.-%ige Natronlauge verwendet wurde. Folgende Mengen wurden dabei pro Stunde dosiert:
820 g (9,8 Mol) Cyanamid (50 %ig)
5700 g (20,4 Mol) Natronlauge (15 %ig)
600 g (9,4 Mol) Chlorcyan (96 %ig)

Dabei wurde eine rotbraune Lösung erhalten, die bei 55 °C über eine Aktivkohleschüttung (1 g pro Liter Lösung) mit einer Verweilzeit von 10 min. gefahren wurde. Die filtrierte Lösung wurde dann im Vakuum (ca. 200 mbar) soweit eingedampft, daß bei 60 °C ein dünner Kristallbrei entsteht. Dieser Brei wurde innerhalb von 3 Stunden auf 0 °C linear abgekühlt und das Produkt in üblicher Weise isoliert.
Es wurden pro Stunde 730 g (87 % d. Th) Natrium-Dicyanamid mit einer Reinheit von 97,2 % erhalten. Der Anteil an Natriumchlorid im Produkt betrug 2,4 %.

## Patentansprüche

1. Verfahren zur Herstellung von Natrium-Dicyanamid, **dadurch gekennzeichnet, daß** man Cyanamid in wäßriger Lösung gleichzeitig mit Natronlauge und Chlorcyan bei Temperaturen von 40 bis 100 °C und einem pH-Wert von 7,0 bis 10,0 umsetzt.

2. Verfahren nach Anspruch 1, **dadurch gekennzeichnet, daß** man Cyanamid als 20 bis 60 Gew.-%ige wäßrige Lösung verwendet.

3. Verfahren nach Anspruch 1 oder 2, **dadurch gekennzeichnet, daß** man die Natronlauge als 10 bis 50 Gew.-%ige wäßrige Lösung, vorzugsweise 20 bis 30 Gew.-%ige Lösung, einsetzt.

4. Verfahren nach einem der Ansprüche 1 bis 3, **dadurch gekennzeichnet, daß** Chlorcyan gasförmig und in technischer Qualität verwendet wird.

5. Verfahren nach einem der Ansprüche 1 bis 4, **dadurch gekennzeichnet, daß** die Reaktionstemperatur 50 bis 80 °C beträgt.

6. Verfahren nach einem der Ansprüche 1 bis 5, **dadurch gekennzeichnet, daß** man den pH-Wert auf 7,0 bis 8,5 einstellt.

7. Verfahren nach einem der Ansprüche 1 bis 6, **dadurch gekennzeichnet, daß** pro Mol Cyanamid 2,0 bis 2,4 Mol Natriumhydroxid eingesetzt werden.

8. Verfahren nach einem der Ansprüche 1 bis 7, **dadurch gekennzeichnet, daß** man das Chlorcyan in äquimolarem oder annähernd äquimolarem Verhältnis bezogen auf das eingesetzte Cyanamid verwendet.

9. Verfahren nach einem der Ansprüche 1 bis 8, **dadurch gekennzeichnet, daß** die Rohstoffe gleichzeitig einem Reaktor mit guter Durchmischung separat zudosiert werden und die Reaktionslösung kontinuierlich abgezogen wird.

10. Verfahren nach einem der Ansprüche 1 bis 9, **dadurch gekennzeichnet, daß** die Zudosierung des Chlorcyans in der Weise erfolgt, daß ein konstanter pH-Wert eingehalten wird.

11. Verfahren nach einem der Ansprüche 1 bis 10, **dadurch gekennzeichnet, daß** die Rohstoffe in einer solchen Konzentration eingesetzt werden, daß das Natrium-Dicyanamid bei der jeweiligen Reaktionstemperatur vollständig in Lösung bleibt.

12. Verfahren nach einem der Ansprüche 1 bis 11, **dadurch gekennzeichnet, daß** man das Natrium-Dicyanamid aus der Reaktionslösung auskristallisiert und nach den üblichen Methoden, wie z.B. Filtration, abtrennt.

13. Verfahren nach einem der Ansprüche 1 bis 12, **dadurch gekennzeichnet, daß** man die Reaktionslösung vor der Kristallisation einer Behandlung mit Aktivkohle unterwirft.

14. Verfahren nach Anspruch 13, **dadurch gekennzeichnet, daß** man die Reaktionslösung mit 0,1 bis 5 g Aktivkohle pro Liter Lösung behandelt.

## Claims

1. Process for the production of sodium dicyanamide, **characterized in that** cyanamide in aqueous solution is reacted simultaneously with sodium hydroxide solution and cyanogen chloride at temperatures of 40 to 100°C and a pH of 7.0 to 10.0.

2. Process as claimed in claim 1, **characterized in that** cyanamide is used as a 20 to 60% by weight aqueous solution.

3. Process as claimed in claim 1 or 2, **characterized in that** the sodium hydroxide solution is used as a 10 to 50 % by weight aqueous solution, preferably 20 to 30 % by weight solution.

4. Process as claimed in one of the claims 1 to 3, **characterized in that** cyanogen chloride is used as a gas and in an industrial quality.

5. Process as claimed in one of the claims 1 to 4, **characterized in that** the reaction temperature is 50 to 80°C.

6. Process as claimed in one of the claims 1 to 5, **characterized in that** the pH value is adjusted to 7.0 to 8.5

7. Process as claimed in one of the claims 1 to 6, **characterized in that** 2.0 to 2.4 mol sodium hydroxide is used per mole cyanamide.

8. Process as claimed in one of the claims 1 to 7, **characterized in that** the cyanogen chloride is used in an equimolar or approximately equimolar ratio based on the cyanamide used.

9. Process as claimed in one of the claims 1 to 8, **characterized in that** the raw materials are metered separately and simultaneously into a reactor with good mixing and the reaction solution is continuously removed.

10. Process as claimed in one of the claims 1 to 9, **characterized in that** the metered addition of cyanogen chloride is carried out in such a manner that a constant pH is maintained.

11. Process as claimed in one of the claims 1 to 10, **characterized in that** the raw materials are used at such a concentration that the sodium dicyanamide remains completely in solution at the respective reaction temperature.

12. Process as claimed in one of the claims 1 to 11, **characterized in that** the sodium dicyanamide crystallizes out of the reaction solution and is separated by conventional methods e.g. filtration.

13. Process as claimed in one of the claims 1 to 12, **characterized in that** the reaction solution is treated with activated carbon before the crystallization.

14. Process as claimed in claim 13, **characterized in that** the reaction solution is treated with 0.1 to 5 g activated carbon per litre solution.

## Revendications

1. Procédé de fabrication de dicyanamide de sodium, **caractérisé en ce que** l'on fait réagir du cyanamide en solution aqueuse simultanément avec de la soude caustique et du chlorure de cyanogène à des températures allant de 40 à 100°C et à un pH allant de 7,0 à 10,0.

2. Procédé selon la revendication 1, **caractérisé en ce que** l'on utilise du cyanamide comme solution aqueuse à 20 jusqu'à 60 % en poids.

3. Procédé selon la revendication 1 ou 2, **caractérisé en ce que** l'on met en oeuvre la soude caustique à titre de solution aqueuse à 10 jusqu'à 50 % en poids, de préférence de solution à 20 jusqu'à 30 % en poids.

4. Procédé selon l'une des revendications 1 à 3, **caractérisé en ce que** le chlorure de cyanogène est utilisé sous forme de gaz et en qualité technique.

5. Procédé selon l'une des revendications 1 à 4, **caractérisé en ce que** la température de réaction se situe entre 50 et 80°C.

6. Procédé selon l'une des revendications 1 à 5, **caractérisé en ce que** l'on règle le pH entre 7,0 et 8,5.

7. Procédé selon l'une des revendications 1 à 6, **caractérisé en ce que** l'on utilise entre 2,0 et 2,4 moles d'hydroxyde de sodium par mole de cyanamide.

8. Procédé selon l'une des revendications 1 à 7, **caractérisé en ce que** l'on utilise le chlorure de cyanogène en rapport équimolaire ou approximativement équimolaire sur le cyanamide mis en oeuvre.

9. Procédé selon l'une des revendications 1 à 8, **caractérisé en ce que** les matières brutes sont ajoutées simultanément séparément à un réacteur en mélangeant bien et la solution de réaction est extraite en continu.

10. Procédé selon l'une des revendications 1 à 9, **caractérisé en ce que** l'ajout du chlorure de cyanogène s'effectue de telle manière qu'un pH constant est maintenu.

11. Procédé selon l'une des revendications 1 à 10, **caractérisé en ce que** les matières brutes sont mises en oeuvre en une telle concentration que le dicyanamide de sodium reste entièrement en solution à la température de réaction en question.

12. Procédé selon l'une des revendications 1 à 11, **caractérisé en ce que** l'on cristallise le dicyanamide de sodium à partir de la solution de réaction et le sépare selon les méthodes usuelles, comme par exemple par filtration.

13. Procédé selon l'une des revendications 1 à 12, **caractérisé en ce que** l'on soumet la solution de réaction à un traitement aux charbons actifs avant la cristallisation.

14. Procédé selon la revendication 13, **caractérisé en ce que** l'on traite la solution de réaction avec 0,1 à 5 g de charbons actifs par litre de solution.
